# EUROPEAN PATENT SPECIFICATION

(11) **EP 1 323 888 B1**
(45) Date of publication and mention of the grant of the patent: **18.01.2006**
(21) Application number: 03003737.8
(22) Date of filing: 09.06.1998
(51) Int. Cl.: E21B 43/26

(54) **Method of fracturing a subterranean formation**
Verfahren zum Frakturieren unterirdischer Lagerstätten
Procédé pour la fracturation de formations souterraines

(30) Priority: 10.06.1997 US 49045; 05.08.1997 US 54455
(43) Date of publication of application: 02.07.2003
(62) Divisional of application: 98928993.9
(73) Proprietor: SCHLUMBERGER TECHNOLOGY CORPORATION, Sugarland, Texas 77478 (US)
(72) Inventor: Dahanayake, Manilal S., Princeton Junction, NJ 08550 (US); Yang, Jiang, Plainsboro, NJ 08536 (US); Niu, Joseph, H., Houston, TX 77086 (US); Derian, Paul-Joel, Lawrenceville, NJ 08648 (US); Dino, David, Cranbury, NJ 08512 (US); Li, Ruoxin, Plainsboro, NJ 08536 (US)

(56) References cited:
- US-A- 4 458 757
- US-A- 4 476 931
- US-A- 4 796 702
- US-A- 5 551 516

## Description

### FIELD OF THE INVENTION

This invention relates to methods of fracturing a subterranean formation using viscoelastic fluids which contain a surfactant.

### BACKGROUND OF THE INVENTION

It is known to thicken the aqueous phase of a suspension of solid particles or emulsified droplets. The addition of thickeners increases the viscosity of the aqueous phase and thereby retards settling of the particles or droplets. Such retardation is useful to maintain the particles or droplets in suspension during the storage, use, and/or transport of the suspension.

Polymeric thickeners, e.g. starches, which thicken by entanglement of the polymeric chains, have been used to viscosity the aqueous phase of suspensions. Such thickeners can degrade under the influence of mechanical shear or chemical scission (e.g. by oxidation or hydrolysis) of the polymeric chains which results in a loss of viscosity and, thus, suspension stability.

Cationic surfactants have been found which form rodlike micelles under certain conditions. The presence of the rod-like micelles imparts to the fluid viscoelastic properties. However, cationic surfactants tend to have high toxicity and very low biodegradability.

### SUMMARY OF THE INVENTION

The viscoelastic fluids consist of an amphoteric/zwitterionic surfactant and an organic acid/salt and/or inorganic salts.

Thus, this invention specifically relates to a viscoelastic fluid comprising:
(1) an aqueous medium;
(2) an amount of a surfactant selected from the group consisting of amphoteric surfactants, zwitterionic surfactants and mixtures thereof, effective to render said aqueous medium viscoelastic; and
(3) a member selected from the group consisting of organic acids, organic acid salts, inorganic salts, and combinations of one or more organic acids or organic acid salts with one or more inorganic salts.

In yet another embodiment of the present invention, the invention relates to a viscoelastic fluid consisting essentially of:
(1) an aqueous medium;
(2) an amount of a surfactant comprising an amine oxide surfactant; and
(3) an anionic surfactant containing a hydrophobe having at least 14 carbon atoms.

The term "viscoelastic" refers to those viscous fluids having elastic properties, i.e., the liquid at least partially returns to its original form when an applied stress is released. The thickened aqueous viscoelastic fluids are useful as water-based hydraulic fluids in lubricant and hydraulic fracturing fluids to increase permeability in oil production.

This invention relates to a method for fracturing a subterranean formation comprising pumping a viscoelastic fluid through a wellbore and into a subterranean formation at a pressure sufficient to fracture the formation.

### BRIEF DESCRIPTION OF THE DRAWINGS

**Figure 1** shows viscosity versus shear rate for a viscoelastic surfactant solution prepared by adding 5 percent of disodium tallowiminodipropionate (Mirataine T2C®) and 2.25 percent of phthalic acid to water.
**Figure 2** shows the dynamic modulus G' (storage modulus) and G" (loss modulus) at 25° C and 50° C of the same solution as Figure 1.
**Figure 3** shows the viscosity versus shear rate for a viscoelastic surfactant solution prepared by adding 5 percent of disodium tallowiminodipropionate (Mirataine T2C®), 4 percent of NH₄Cl and 1.75- 2.0 percent of phthalic acid to water.
**Figure 4** shows the viscosity versus shear rate for viscoelastic surfactant solutions prepared by adding 4 or 5 percent of disodium oleamidopropyl betaine (Mirataine BET-O®), 3 percent of KC1 and 0.5 percent of phthalic acid to water.
**Figure 5** shows the dynamic modulus G' (storage modulus) and G" (loss modulus) at 25 °C and 50 °C of the same solution as Figure 4.

### DETAILED DESCRIPTION OF THE INVENTION

The property of viscoelasticity in general well known and reference is made to S. Gravsholt, *Journal of Coll. And Interface Sci.,* 57(3), 575 (1976); Hoffmann et al., "Influence of Ionic Surfactants on the Viscoelastic Properties of Cwitterionic Surfactant Solutions", *Langmuir,* 8, 2140-2146 91992); and Hoffmann et al., The Rheological Behaviour of Different Viscoelastic Surfactant Solutions, *Tenside Surf. Det.,* 31, 289-400, 1994. Of the test methods specified by these references to determine whether a liquid possesses viscoelastic properties, one test which has been found to be useful in determining the viscoelasticity of an aqueous solution consists of swirling the solution and visually observing whether the bubbles created by the swirling recoil after the swirling is stopped. Any recoil of the bubbles indicates viscoelasticity. Another useful test is to measure the storage modulus (G') and the loss modulus (G") at a given temperature. If G'>G" at some point or over some range of points below about 10 rad/sec, typically between about 0.001 to about 10 rad/sec, more typically between about 0.1 and about 10 rad/sec, at a given temperature and if G'>10⁻² Pascals, preferably 10⁻¹ Pascals, the fluid is typically considered viscoelastic at that temperature. Rheological measurements such as G' and G" are discussed more fully in "Rheological Measurements", Encyclopedia of Chemical Technology, vol. 21, pp. 347-372, (John Wiley & Sons, Inc., N.Y., N.Y., 1997, 4^{th} ed.). To the extent necessary for completion, the above disclosures are expressly incorporated herein by reference.

Viscoelasticity is caused by a different type of micelle formation than the usual spherical micelles formed by most surfactants. Viscoelastic surfactant fluids form worm-like, rod-like or cylindrical micelles in solution. The formation of long, cylindrical micelles creates useful rheological properties. The viscoelastic surfactant solution exhibits shear thinning behavior, and remains stable despite repeated high shear applications. By comparison, the typical polymeric thickener will irreversibly degrade when subjected to high shear.

In the summary of the invention and this detailed description, each numerical value should be read once as modified by the term "about" (unless already expressly so modified), and then read again as not so modified unless otherwise indicated in context.

The viscoelastic surfactants can be either ionic or nonionic. The present invention comprises an aqueous viscoelastic surfactant based on amphoteric or zwitterionic surfactants. The amphoteric surfactant is a class of surfactant that has both a positively charged moiety and a negatively charged moiety over a certain pH range (e.g. typically slightly acidic), only a negatively charged moiety over a certain pH range (e.g. typically slightly alkaline) and only a positively charged moiety at a different pH range (e.g. typically moderately acidic), .while a zwitterionic surfactant has a permanently positively charged moiety in the molecule regardless of pH and a negatively charged moiety at alkaline pH.

The viscoelastic fluid comprises water, surfactant, and a water-soluble compound selected from the group consisting of organic acids, organic acid salts, inorganic salts, and mixtures thereof. Alternatively, the viscoelastic fluid can comprise water, an amine oxide surfactant and an anionic surfactant containing a hydrophobe having at least about 14 carbon atoms. The viscoelastic surfactant solution is useful as a fracturing fluid of water-based hydraulic fluid. The viscoelastic fluid used as a fracturing fluid may optionally contain a gas such as air, nitrogen or carbon dioxide to provide an energized fluid or a foam.

The component of the fluid which will be present in the greatest concentration is water, i.e. typically water will be a major amount by weight of the viscoelastic fluid. Water is typically present in an amount by weight greater than or equal to about 50% by weight of the fluid. The water can be from any source so long as the source contains no contaminants which are incompatible with the other components of the viscoelastic fluid (e.g., by causing undesirable precipitation). Thus, the water need not be potable and may be brackish or contain other materials typical of sources of water found in or near oil fields.

Examples of zwitterionic surfactants useful in the present invention are represented by the formula: 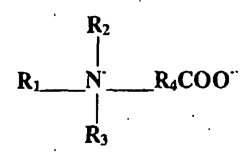
wherein R₁ represents a hydrophobic moiety of alkyl, alkylarylalkyl, alkoxyalkyl, alkylaminoalkyl and alkylamidoalkyl, wherein alkyl represents a group that contains from about 12 to about 24 carbon atoms which may be branched or straight chained and which may be saturated or unsaturated. Representative long chain alkyl groups include tetradecyl (myristyl), hexadecyl (cetyl), octadecentlyl (oleyl), octadecyl (stearyl), docosenoic (erucyl) and the derivatives of tallow, coco, soya and rapeseed oils. The preferred alkyl and alkenyl groups are alkyl and alkenyl groups having from about 16 to about 22 carbon atoms. Representative of alkylamidoalkyl is alkylamidopropyl with alkyl being as described above.

R₂ and R₃ are independently an aliphatic chain (i.e. as opposed to aromatic at the atom bonded to the quaternary nitrogen, e.g., alkyl, alkenyl, arylalkyl, hydroxyalkyl, carboxyalkyl, and hydroxyalkyl-polyoxyalkylene, e.g. hydroxyethyl-polyoxyethylene or hydroxypropyl-polyoxypropylene) having from 1 to about 30 atoms, preferably from about 1 to about 20 atoms, more preferably from about 1 to about 10 atoms and most preferably from about 1 to about 6 atoms in which the aliphatic group can be branched or straight chained, saturated or unsaturated. Preferred alkyl chains are methyl, ethyl, preferred arylalkyl is benzyl, and preferred hydroxyalkyls are hydroxyethyl or hydroxypropyl, while preferred carboxyalkyls are acetate and propionate.

R₄ is a hydrocarbyl radical (e.g. alkylene) with chain length 1 to 4. Preferred are methylene or ethylene groups.

Specific examples of zwitterionic surfactants include the following structures: 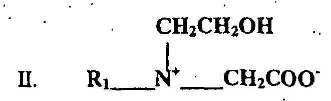 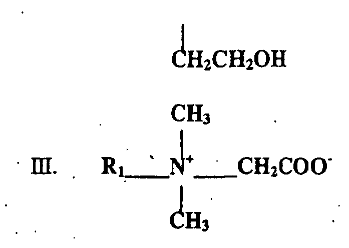 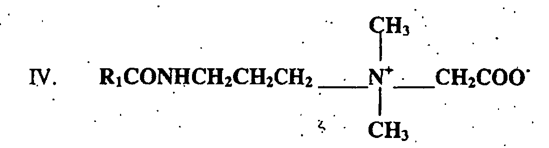 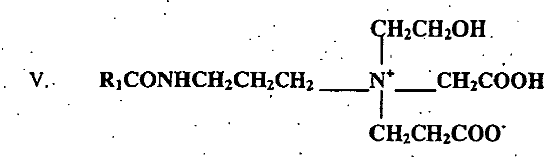
Wherein R₁ has been previously defined herein.

Examples of amphoteric surfactants include those represented by formula VI: 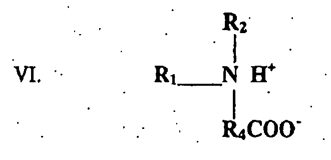
wherein R₁, R₂, and R₄ are the same as defined above:

Other specific examples of amphoteric surfactants include the following structures: 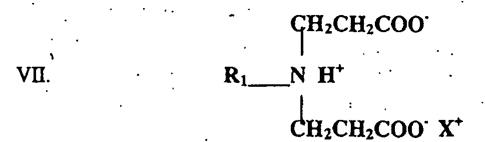 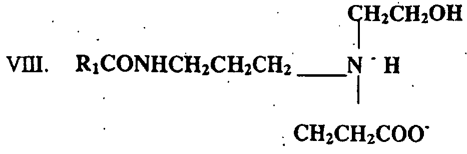
wherein R₁ has been previously defined herein, and X⁻ is an inorganic cation such as Na⁺, K⁺, NH₄⁻ associated with a carboxylate group or hydrogen atom in an acidic medium.

A typical chemical process to synthesize dihydroxy ethoxylate glycinate starting from ethoxylated alkylamine is as follows: 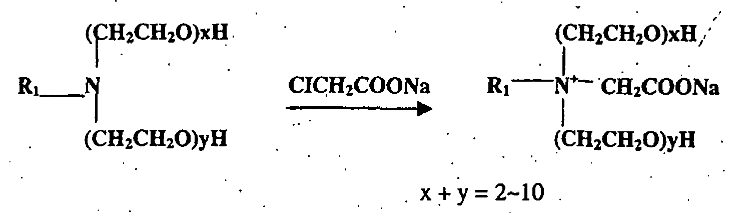
The final products may also include some unreacted starting dihydroxy ethyl alkyl amine, and small amounts of sodium glycolate, diglycolate and sodium chloride as by products. A similar process can be used to prepare propoxylated analogues.

A typical chemical process to synthesize alkyliminiodipropionate from alkyl amine is as follows:

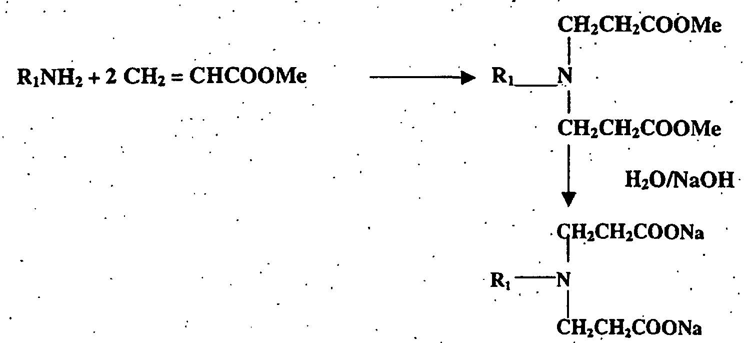

The final products will also include a small amount of methanol, unreacted acrylic acid, alkylamine and some oligomeric acrylate or acid as by products.

A typical chemical process to synthesize alkylamidopropyl betaine from alkyl amine is as follows:

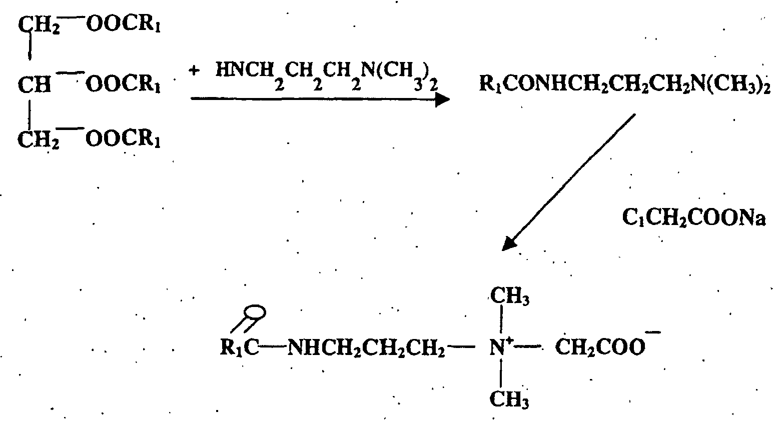

The final products will also include a small amount of sodium glycolate, diglycolate, sodium chloride and glycerine as by products.

In still another embodiment of the invention, the zwitterionic surfactant selected is an amine oxide. This material has the following structure: 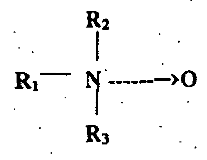
Where R₁, R₂ and R₃ are as defined above.

The surfactants are used in an amount which in combination with the other ingredients is sufficient to form a viscoelastic fluid, which amount will typically be a minor amount by weight of the fluid (e.g. less than about 50% by weight). The concentration of surfactant can range from about 0.5% to about 10% percent by weight of the fluid, more typically from about 0.5% to about 8%, and even more typically from about 0.5% to about 6%. Optimum concentrations for any particular set of parameters can be determined experimentally.

The fluid also comprises one or more members from the group of organic acids, organic acid salts, and inorganic salts. Mixtures of the above members are specifically contemplated as falling within the scope of the invention. This member will typically be present in only a minor amount (e.g. less than about 20% by weight of the fluid).

The organic acid is typically a sulfonic acid or a carboxylic acid and the anionic counter-ion of the organic acid salts are typically sulfonates or carboxylates. Representative of such organic molecules include various aromatic sulfonates and carboxylates such as p-toluene sulfonate, naphthalene sulfonate, chlorobenzoic acid, salicylic acid, phthalic acid and the like, where such counter-ions are water-soluble. Most preferred as salicylate, phthalate, p-toluene sulfonate, hydroxynaphthalene carboxylates, e.g. 5-hydroxy-1-napthoic acid, 6-hydroxy-1-napthoic acid, 7-hydroxy-1-napthoic acid, 1-hydroxy-2-naphthoic acid, preferably 3-hydroxy-2-naphthoic acid, 5-hydroxy-2-naphthoic acid, 7-hydroxy-2-napthoic acid, and 1, 3-dihydroxy-2-naphthoic acid and 3, 4-dichlorobenzoate. The organic acid or salt thereof typically aids the development of increased viscosity which is characteristic of preferred fluids. Without wishing to be bound by any theory unless expressly noted otherwise in context, it is thought that association of the organic acid or salt thereof with the micelle decreases the aggregation curvature of the micelle and thus promotes the formation of a worm-like or rod-like micelle. The organic acid or salt thereof will typically be present in the viscoelastic fluid at a weight concentration of from about 0.1% to about 10%, more typically from about 0.1% to about 7%, and even more typically from about 0.1% to about 6%.

The inorganic salts that are particularly suitable for use in the viscoelastic fluid include water-soluble potassium, sodium, and ammonium salts, such as potassium chloride and ammonium chloride. Additionally, calcium chloride, calcium bromide and zinc halide salts may also be used. The inorganic salts may aid in the development of increased viscosity which is characteristic of preferred fluids. Further, the inorganic salt may assist in maintaining the stability of a geologic formation to which the fluid is exposed. Formation stability and in particular clay stability (by inhibiting hydration of the clay) is achieved at a concentration level of a few percent by weight and as such the density of fluid is not significantly altered by the presence of the inorganic salt unless fluid density becomes an important consideration, at which point, heavier inorganic salts may be used. The inorganic salt will typically be present in the viscoelastic fluid at a weight concentration of from about 0.1% to about 30%, more typically from about 0.1% to about 10%, and even more typically from about 0.1% to about 8%. Organic salts, e.g. trimethylammonium hydrochloride and tetramethylammonium chloride, may also be used in addition to, or as a replacement for, the inorganic salts.

As an alternative to the organic salts and inorganic salts, or as a partial substitute therefor, one can use a medium to long chain alcohol (preferably an alkanol), preferably having five to ten carbon atoms, or an alcohol ethoxylate (preferably an alkanol ethoxylate) preferably of a 12 to 16 carbon alcohol and having 1 to 6, preferably 1-4, oxyethylene units.

In the embodiment where the surfactant selected is an amine oxide, it is preferably used in combination with an anionic surfactant containing a hydrophobe having at least about 14 carbon atoms. Examples of suitable anionic surfactants include alkyl sulfates or sulfonates having alkali metal counter ions or alkyl carboxylates, wherein alkyl represents a group that contains from about 14 to about 24 carbon atoms which may be branched or straight chained and which may be saturated or unsaturated, and more preferably contains between about 16 and about 22 carbon atoms.

For this embodiment (amine oxide/anionic surfactant) the weight ratio of the amine oxide to anionic surfactant is from about 100:1 to about 50:50.

In addition to the water-soluble salts and thickening agents described hereinbefore, the viscoelastic fluid used as a hydraulic fracturing fluid may contain other conventional constituents which perform specific desired functions, e.g., corrosion inhibitors, fluid-loss additives and the like. A proppant can be suspended in the fracturing fluid. The pH of the fluid will typically range from strongly acidic (e.g. less than a pH of about 3) to slightly alkaline (e.g. from a pH just greater than 7.0 to about 8.5, more typically to about 8.0) or moderately alkaline (e.g. a pH of about 8.5 to about 9.5). Strongly alkaline pHs (e.g. above a pH of about 10) should be avoided.

It is also conceivable to combine the above amphoteric/zwitterionic surfactants with conventional anionic, nonionic and cationic surfactants to get the desired viscoelastic fluid for a skilled worker. In typical embodiments, the amphoteric/zwitterionic surfactant is typically present in a major amount by weight of all surfactants, and more typically is essentially the only surfactant present. Typically, the viscoelastic fluid will be essentially free of anionic surfactants, e.g. it will contain less than about 0.5%, more typically less than about 0.2%, even more typically less than 0.1% by weight of anionic surfactants.

To prepare the aqueous fluids in accordance with the present invention, the surfactant is added to an aqueous solution in which has been dissolved a water-soluble inorganic salt, e.g. potassium chloride or ammonium chloride and/or at least one organic acid or water-soluble organic acid salt to provide selective control of the loss of particle suspension properties. In the embodiment wherein the fluid is a mixture of water, and amine oxide surfactant and an anionic surfactant, a simple mixture of the three components is utilized. Standard mixing procedures known in the art can be employed since heating of the solution and special agitation conditions are normally not necessary. Of course, if used under conditions of extreme cold such as found in Alaska, normal heating procedures should be employed. It has been found in some instances preferable to dissolve the thickener into a lower molecular weight alcohol prior to mixing it with the aqueous solution. The lower molecular weight alcohol, for instance isopropanol, functions as an aid to solubilize the thickener. Other similar agents may also be employed. Further, a defoaming agent such as a polyglycol maybe employed to prevent undesirable foaming during the preparation of the viscoelastic fluid if a foam is not desirable under the conditions of the treatment. If a form or gas-energized fluid is desired, any gas such as air, nitrogen, carbon dioxide and the like may be added.

The hydraulic fracturing method of this invention uses otherwise conventional techniques. The disclosure of U.S. Patent No. 5,551,516 (Normal et al) is incorporated by reference in this regard. Oilfield applications of various materials are described in "Oilfield Applications", Encyclopedia of Polymer Science and Engineering, vol. 10, pp. 328-366 (John Wiley & Sons, Inc. New York, New York, 1987) and references cited therein, the disclosures of which are incorporated herein by reference thereto.

Hydraulic fracturing is a term that has been applied to a variety of methods used to stimulate the production of fluids such as oil, natural gas etc., from subterranean formations. In hydraulic fracturing, a fracturing fluid is injected through a wellbore and against the face of the formation at a pressure and flow rate at least sufficient to overcome the overburden pressure and to initiate and/or extend a fracture(s) into the formation. The fracturing fluid usually carries a proppant such as 20-40 mesh sand, bauxite, glass beads, etc., suspended in the fracturing fluid and transported into a fracture. The proppant then keeps the formation from closing back down upon itself when the pressure is released. The proppant filled fractures provide permeable channels through which the formation fluids can flow to the wellbore and thereafter be withdrawn. Viscoelastic fluids have also been extensively used in gravel pack treatment.

The following examples are presented to illustrate the preparation and properties of aqueous viscoelastic surfactant based hydraulic fluids and should not be construed to limit the scope of the invention, unless otherwise expressly indicated in the appended claims. All percentages, concentrations, ratios, parts, etc. are by weight unless otherwise noted or apparent from the context of their use.

### EXAMPLES

### EXAMPLE 1

Viscoelastic surfactant solutions are prepared by addition 5 percent of ammonium chloride and 3 to 5 percent of dihydroxyethyl tallow glycinate (Mirataine TM®) to water. The systems were stirred until all of the surfactant dissolved. All of the samples were observed to be viscoelastic by the bubble recoil test. Rheology of solution was measured by Rheometric ARES at 25°C). The results are given below in Table 1.

**Table 1**

| Shear rate (sec⁻¹) | Viscosity (cps) in 5% NH₄Cl | | |
|---|---|---|---|
| | 3% Surfactant | 4% Surfactant | 5% Surfactant |
| 10 | 1692.4 | 2619.8 | 3774.7 |
| 18 | 967.7 | 1490.6 | 2144 |
| 32 | 555.5 | 851.6 | 1214.3 |
| 56 | 319.2 | 483.2 | 688.1 |
| 100 | 184.6 | 278 | 393.6 |
| 178 | 107.5 | 159.3 | 225.4 |

### EXAMPLE 2

In a manner similar to Example 1, 0.3 percent of phthalic acid and 2 to 4 percent of dihydroxyethyl, tallow glycinate (Mirataine TM®) were put into solution. All of the samples were observed to be viscoelastic by the bubble recoil test. Rheological measurements were performed in the manner described in Example 1 at 25. °C. The results are shown below in Table 2:

**TABLE 2**

| Shear rate (sec⁻¹) | Viscosity (cps) in 0.3% phthalic acid | | |
|---|---|---|---|
| | 2% Surfactant | 3% Surfactant | 4% Surfactant |
| 10 | 791.5 | 1474.6 | 1968.7 |
| 18 | 455.3 | 840.9 | 1101.5 |
| 32 | 262.4 | 490 | 564.5 |
| 56 | 152 | 279.2 | 361.7 |
| 100 | 88 | 160.9 | 356.6 |
| 178 | 53 | 91.6 | 342.3 |

### EXAMPLE 3

The theological measurements were also performed at higher temperatures by FANN Rheometer. The results for 4 percent dihydroxyethyl tallow glycinate (Mirataine TM®) and 0.3 percent of phthalic acid solution are shown below in Table 3:

**TABLE 3**

| Temperature (°F) | Viscosity at 100 rpm (cps) |
|---|---|
| 82 | 170 |
| 129 | 51 |
| 189 | 30 |
| 239 | 22 |
| 288 | 15 |

### EXAMPLE 4

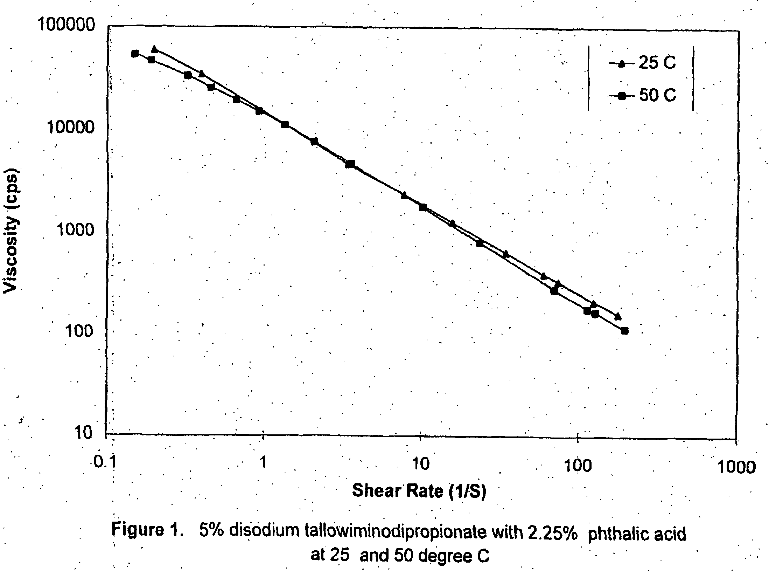

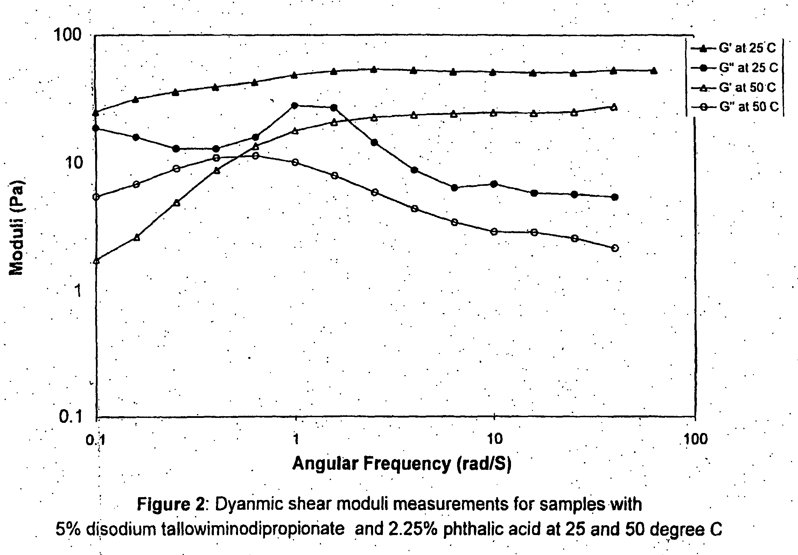

The viscoelastic surfactant solutions are prepared by adding 5 percent of disodium tallowiminodipropionate (Mirataine T2C®) and 2.25 percent of phthalic acid to water. The systems were stirred and warmed up to 50 °C until all of the phthalic acid dissolved. All of the samples were observed to be viscoelastic by the bubble recoil test. Rheology was measured for viscosity and dynamic modulus G' (storage modulus) and G" (loss modulus) by a Rheometric SR-200 at 25 °C. The results are shown in Figures 1 and 2.

### EXAMPLE 5

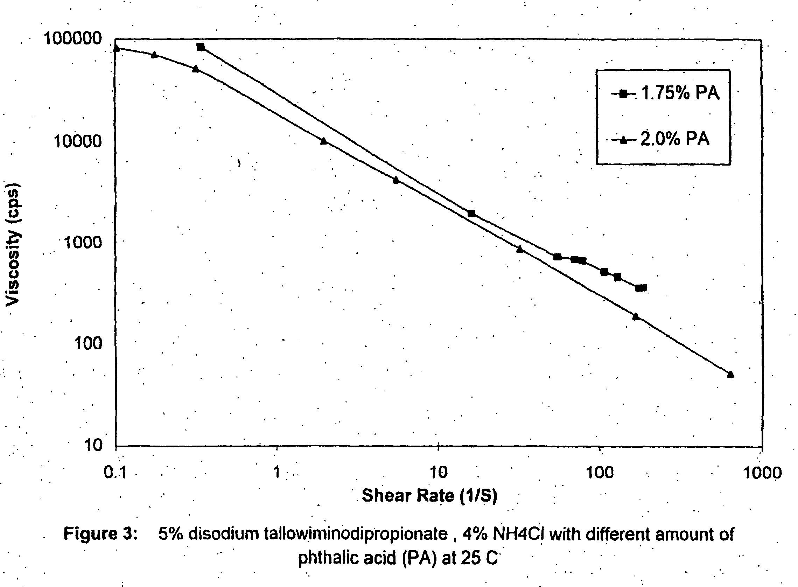

In a manner similar to Example 4, 5 percent of disodium tallowiminodipropionate (Mirataine T2C®), 4 percent of NH₄Cl and 1.75~2.0 percent of phthalic acid in water were mixed together. All of the samples were observed to be viscoelastic by the bubble recoil test. Rheological measurements were performed in the manner described in Example 4 at 25 °C. The results are shown in Figure 3.

### EXAMPLE 6

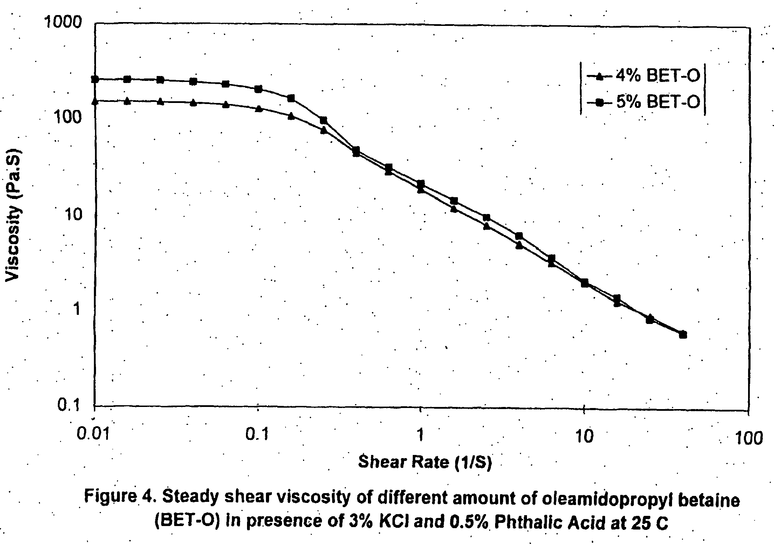

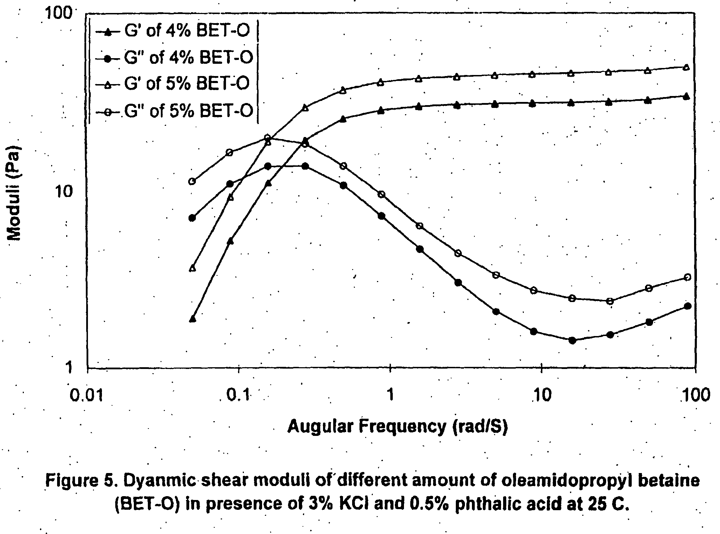

The viscoelastic surfactant solutions are prepared by addition of 4-5% percent of oleamidbpropyl betaine (Mirataine BET-O®), 3% KC1 and 0.5% phthalic acid to water. The system was stirred until all phthalic acid dissolved. Rheology was measured for steady viscosity and dynamic modulus G'/G" by Rheometric ARES at 25 °C. The results are shown in Figures 4 and 5.

### EXAMPLE 7

A viscoelastic surfactant solution is prepared by mixing together in 95.65 parts of water 4 parts of euricic amido propylene dimethyl amine oxide and 0.35 parts of sodium oleyl sulfate. The pH is adjusted to 8 by the addition of NaOH. Its temperature stability is determined by measuring its viscosity in cps (at shear rate of 100 sec⁻¹). The results are shown in Table 4.

### EXAMPLE 8

A viscoelastic surfactant solution is prepared by mixing together in 95.50 parts of water 4.0 parts of euricic amido propylene dimethyl amine oxide and 0.50 parts of sodium oleyl sulfate. Its temperature stability is determined by measuring its viscosity in cps (at shear rate of 100 sec⁻¹). The results are shown in Table 4.

**Table 4**

| Temperature (°F) | Viscosity Examples 8 | Viscosity Example 7 |
|---|---|---|
| 100 | 282 | 247 |
| 120 | 302 | 293 |
| 140 | 308 | 305 |
| 160 | 168 | 237 |
| 180 | 162 | 166 |
| 200 | 230 | 231 |
| 220 | 119 | 193 |
| 240 | 50 | 63 |
| 250 | 36 | 36 |
| 260 | 30 | 27 |
| 270 | 16 | 10 |

### EXAMPLE 9

A viscoelastic surfactant solution is prepared by mixing together in 96.1 parts of water 3.0 parts of euricic amidopropyl amine oxide and 0.9 parts of sodium behenyl sulfate. The pH is adjusted to 9 by the addition of NaOH. Its temperature stability is determined by measuring its viscosity in CPS (at shear rate of 100 sec⁻¹). The results are shown in Table 5.

### EXAMPLE 10

A viscoelastic surfactant solution is prepared by mixing together in 94.8 parts of water 4.0 parts of euricic amidopropyl amine oxide and 1.2 parts of sodium behenyl sulfate. The pH is adjusted to 9 by the addition of NaOH. Its temperature stability is determined by measuring its viscosity in cps (at shear rate of 100 sec⁻¹). The results are shown in Table 5.

**TABLE 5**

| Temperature (°F) | Viscosity Example 9 | Viscosity Example 10 |
|---|---|---|
| 100 | 175 | 234 |
| 120 | 168 | 226 |
| 140 | 169 | 297 |
| 160 | 256 | 518 |
| 180 | 309 | 454 |
| 200 | 276 | 173 |
| 220 | 140 | 214 |
| 240 | 154 | 284 |
| 260 | 94 | 351 |
| 270 | 52 | 215 |
| 280 | 31 | 90 |
| 290 | 25 | 40 |
| 300 | 17 | 4 |

## Claims

1. A method of treating a subterranean formation comprising the step of pumping a viscoelastic fluid through a wellbore, wherein said viscoelastic fluid comprises:
a) an aqueous medium;
b) a surfactant selected from the group consisting of amphoteric surfactants, zwitterionic surfactants, and mixtures thereof; and
c) a member selected from the group consisting of organic acids, organic acid salts, inorganic salts, and combinations of one or more organic acids or organic acid salts with one or more inorganic salts; wherein said fluid exhibits the property of viscoelasticity.

2. The method of claim 1 wherein said method of treating is a method of fracturing wherein said step of pumping is conducted at a pressure sufficient to fracture said formation.

3. The method of claim 2 wherein said viscoelastic fluid further comprises a mineral acid at a concentration sufficient to reduce the pH of said viscoelastic fluid to about 3 or less.

4. The method as claimed in any of the preceding claims wherein the amount of said surfactant is from about 0.5% to about 6% by weight of said fluid.

5. The method as claimed any of the preceding claims wherein said surfactant is a zwitterionic surfactant comprising a quaternary ammonium hydrophilic moiety covalently bonded with an alkyl or a hydroxyalkyl group.

6. The method as claimed in any of the preceding claims wherein said surfactant comprises a carboxylate hydrophilic moiety.

7. The method as claimed in any of the preceding claims wherein said member comprises an aromatic moiety selected from the group consisting of sulfonic moieties, sulfonate moieties, carboxylic moieties, and carboxylate moieties.

8. The method as claimed in claim 7 wherein said aromatic moiety is selected from the group consisting of salicylate ions and phthalate ions, hydroxynaphthalene carboxylate ions, and mixtures thereof.

9. The method as claimed in any of the preceding claims wherein said viscoelastic fluid further comprises a particulate proppant suspended therein.

10. The method as claimed in any of the preceding claims wherein said viscoelastic fluid further comprises an additive selected from the group consisting of corrosion inhibitors and fluid-loss additives and mixtures thereof.

11. The method as claimed in any of the preceding claims wherein said member is present in an amount of from about 0.1% to about 30% by weight, preferably in an amount of from about 0.1 % to about 8% by weight.

12. The method according to any of the preceding claims wherein said surfactant is represented by the formula (I): 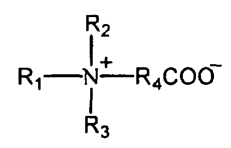
or the formula (II): 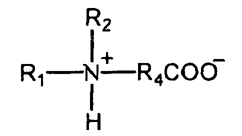
wherein R₁ represents alkyl, alkenyl, alkylarylalkylene, alkenylarylalkylene, alkylaminoalkylene, alkenylaminoalkylene, alkylamidoalkylene, or alkenylamidoalkylene, wherein each of said alkyl groups contains from about 14 to about 24 carbon atoms and may be branched or straight chained and saturated or unsaturated, and wherein said alkylene groups have from about 1 to about 6 carbon atoms; R₂ and R₃ are independently aliphatic chains having from about 1 to about 30 carbon atoms, and R₄ is a hydrocarbyl radical with a chain length of about 1 to about 4.

13. The method of claim 12 wherein R₁ is selected from the group consisting of tetradecyl, hexadecyl, and octadecyl.

14. The method of claim 12 wherein R₁ is an alkyl group derived from tallow, coco, soya bean, or rapeseed oil.

15. The method of claim 12 wherein R₂ and R₃ are independently alkyl, alkenyl, arylalkyl, hydroxyalkyl, carboxyalkyl, or hydroxyalkyl-polyoxyalkylene, each having from about I to about 10 carbon atoms and preferably are methyl, ethyl, benzyl, hydroxyethyl, hydroxypropyl, carboxymethyl, or carboxyethyl.

16. The method of claim 12 wherein R₁ is RCONHCH₂CH₂CH₂- wherein R is an alkyl group containing from about 14 to about 24 carbon atoms which may be branched or straight chained and which may be saturated or unsaturated and R₂ and R₃ are each beta-hydroxyethyl.

17. The method of claim 16 wherein R₂ is beta-carboxyethyl and R₄ is ethylene.

18. The method of any of claims 1 through 11 wherein said surfactant is selected from the group consisting of dihydroxyethyl glycinates, alkenylamidoalkyl betaines, and amphoteric imidazoline-derived dipropionates, most preferably form the group consisting of dihydroxyethyl tallow glycinate, disodium tallowiminodipropionate and oleamidopropyl betaine.

19. The method of claim 18 wherein said surfactant is an alkenylamidoalkyl betaine.

20. The method of claim 18 or 19, wherein the fluid comprises from about 0.5% to about 6% of the surfactant and from about 0.1% to about 6% of a combination of a member selected from the group consisting of p-toluene sulfonate, naphthalene sulfonate, chlorobenzoic acid, salicylic acid and phthalic acid, with a member comprising one or more water-soluble ammonium salts.

21. The method of any of claims 1 through 11 wherein said surfactant is an amine oxide surfactant and said member is an anionic surfactant containing a hydrophobe having at least 14 carbon atoms.

22. The method according to claim 21 wherein said amine oxide surfactant is of formula 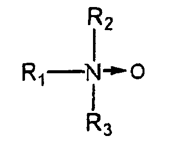
wherein R₁ represents alkyl, alkenyl, alkylarylalkylene, alkenylarylalkylene, alkylaminoalkylene, alkenylaminoalkylene, alkylamidoalkylene, or alkenylamidoalkylene, wherein each of said alkyl groups contains from about 14 to about 24 carbon atoms and may be branched or straight chained and saturated or unsaturated, and wherein said alkylene groups have from about 1 to about 6 carbon atoms; and R₂ and R₃ are independently aliphatic chains having from about 1 to about 30 carbon atoms.

23. The method according to claim 21 wherein said anionic surfactant is an alkyl sulfate or sulfonate having alkali metal counterions or an alkyl carboxylate, wherein alkyl represents a group that contains from about 14 to about 24 carbon atoms, preferably from 16 to about 22 carbon atoms, which may be branched or straight chained and which may be saturated or unsaturated.

24. The method according to claim 21 wherein the weight ratio of amine oxide surfactant to anionic surfactant ranges from about 100:1 to about 50:50.

25. The method according to claim 21 wherein said fracturing step takes place at temperatures greater than about 100°F.

26. The method according to any of the preceding claims wherein said viscoelastic fluid is foamed or energized by the addition of air, nitrogen or carbon dioxide.

## Patentansprüche

1. Verfahren zum Behandeln einer unterirdischen Formation, das den Schritt des Pumpens eines viskoelastischen Fluids durch ein Bohrloch umfasst, wobei das viskoelastische Fluid umfasst:
a) ein wässriges Medium;
b) ein Tensid, das aus der Gruppe ausgewählt ist, die aus amphoteren Tensiden, Zwitterion-Tensiden und Gemischen hiervon besteht; und
c) ein Element, das aus der Gruppe ausgewählt ist, die aus organischen Säuren, organischen Hydrogensalzen, anorganischen Salzen und aus Kombinationen einer oder mehrerer organischer Säuren oder organischer Hydrogensalze mit einem oder mehreren anorganischen Salzen besteht; wobei das Fluid die viskoelastische Eigenschaft zeigt.

2. Verfahren nach Anspruch 1, wobei das Behandlungsverfahren ein Zerklüftungsverfahren ist, bei dem der Pumpschritt bei einem Druck ausgeführt wird, der ausreicht, um die Formation zu zerklüften.

3. Verfahren nach Anspruch 2, bei dem das viskoelastische Fluid ferner eine mineralische Säure mit einer Konzentration, die ausreicht, um den pH-Wert des viskoelastischen Fluids auf etwa 3 oder weniger zu verringern, umfasst.

4. Verfahren nach einem der vorhergehenden Ansprüche, bei dem die Tensidmenge im Bereich von etwa 0,5 bis etwa 6 Gew.-% des Fluids liegt.

5. Verfahren nach einem der vorhergehenden Ansprüche, bei dem das Tensid ein Zwitterionen-Tensid ist, das einen hydrophilen quartären Ammonium-Anteil besitzt, der mit einer Alkyl- oder einer Hydroxyalkyl-Gruppe kovalent gebunden ist.

6. Verfahren nach einem der vorhergehenden Ansprüche, bei dem das Tensid einen hydrophilen Carboxylat-Anteil enthält.

7. Verfahren nach einem der vorhergehenden Ansprüche, bei dem das Element einen aromatischen Anteil enthält, der aus der Gruppe ausgewählt ist, die aus Sulfoanteilen, Sulfonat-Anteilen, Carboxyl-Anteilen und Carboxylat-Anteilen besteht.

8. Verfahren nach Anspruch 7, bei dem der aromatische Anteil ausgewählt ist aus der Gruppe, die aus Salicylat-Ionen und Phthalat-Ionen, Hydroxynaphthalencarboxylat-lonen und Gemischen hiervon besteht.

9. Verfahren nach einem der vorhergehenden Ansprüche, bei dem das viskoelastische Fluid ferner einen darin in Suspension befindlichen Partikel-Hilfsstoff enthält.

10. Verfahren nach einem der vorhergehenden Ansprüche, bei dem das viskoelastische Fluid ferner ein Additiv enthält, das aus der Gruppe ausgewählt ist, die aus Korrosionsverhinderern und Fluidverlust-Additiven und Gemischen hiervon besteht.

11. Verfahren nach einem der vorhergehenden Ansprüche, bei dem das Element in einer Menge im Bereich von etwa 0,1 bis etwa 30 Gew.-%, vorzugsweise in einer Menge im Bereich von etwa 0,1 bis etwa 8 Gew.-% vorhanden ist.

12. Verfahren nach einem der vorhergehenden Ansprüche, bei dem das Tensid gegeben ist durch die Formel (I): 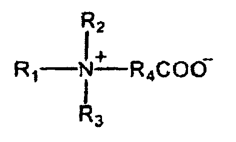
oder durch die Formel (II): 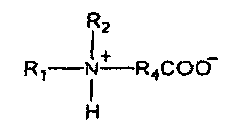
wobei R₁ Alkyl, Alkenyl, Alkylarylalkylen, Alkenylarylalkylen, Alkylaminoalkylen, Alkenylaminoalkylen, Alkylamidoaklylen oder Alkenylamidoalkylen repräsentiert, wobei jede der Alkyl-Gruppen etwa 14 bis etwa 24 Kohlenstoffatome enthält und verzweigt oder geradlinig verkettet und gesättigt oder ungesättigt sein kann, und wobei die Alkylen-Gruppen etwa 1 bis etwa 6 Kohlenstoffatome besitzen; R₂ und R₃ unabhängig voneinander aliphatische Ketten sind, die etwa 1 bis etwa 30 Kohlenstoffatome besitzen, und R₄ ein Hydrocarbyl-Radikal mit einer Kettenlänge von etwa 1 bis etwa 4 ist.

13. Verfahren nach Anspruch 12, bei dem R₁ aus der Gruppe ausgewählt ist, die aus Tetradecyl, Hexadecyl und Oktadecyl besteht.

14. Verfahren nach Anspruch 12, bei dem R₁ eine Alkyl-Gruppe ist, die von Talg-, Kokosnuss-, Soja-, Bohnen- oder Rapsöl abgeleitet ist.

15. Verfahren nach Anspruch 12, bei dem R₂ und R₃ unabhängig voneinander Alkyl, Alkenyl, Arylalkyl, Hydroxyalkyl, Carboxyalkyl oder Hydroxyalkylpolyoxyalkylen sind, wovon jedes etwa 1 bis etwa 10 Kohlenstoffatome besitzt und vorzugsweise Methyl, Ethyl, Benzyl, Hydroxyethyl, Hydroxypropyl, Carboxymethyl, oder Carboxyethyl ist.

16. Verfahren nach Anspruch 12, bei dem R₁ gleich RCONHCH₂CH₂CH₂- ist, wobei R eine Alkyl-Gruppe ist, die etwa 14 bis etwa 24 Kohlenstoffatome enthält, die verzweigt oder geradlinig verkettet sein kann und gesättigt oder ungesättigt sein kann, und wobei R₂ und R₃ jeweils Beta-Hydroxyethyl sind.

17. Verfahren nach Anspruch 16, bei dem R₂ Beta-Carboxyethyl ist und R₄ Ethylen ist.

18. Verfahren nach einem der Ansprüche 1 bis 11, bei dem das Tensid ausgewählt ist aus der Gruppe, die aus Dihydroxyethylglycinaten, Alkenylamidoalkylbetainen und amphoterischen Imidazolinderivat-Dipropionaten besteht, am stärksten bevorzugt aus der Gruppe, die aus Dihydroxyethyltalgglycinat, Dinatriumtalgiminopropionat und Oleamidopropylbetain besteht.

19. Verfahren nach Anspruch 18, bei dem das Tensid ein Alkenylamidoalkylbetain ist.

20. Verfahren nach Anspruch 18 oder 19, bei dem das Fluid etwa 0,5 bis etwa 6 % des Tensids und etwa 0,1 % bis etwa 6 % einer Kombination eines Elements, das aus der Gruppe gewählt ist, die aus p-Toluolsulfonat, Naphthalensulfonat, Chlorbenzoesäure, Salycilsäure und Phthalsäure besteht, mit einem Element, das ein oder mehr wasserlösliche Ammoniumsalze enthält, umfasst.

21. Verfahren nach einem der Ansprüche 1 bis 11, bei dem das Tensid ein Aminoxid-Tensid ist und das Element ein anionisches Tensid ist, das eine hydrophobe Verbindung enthält, die wenigstens 14 Kohlenstoffatome besitzt.

22. Verfahren nach Anspruch 21, bei dem das Aminoxid-Tensid die folgende Formel hat: 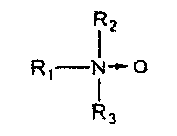
wobei R₁ Alkyl, Alkenyl, Alkylarylalkylen, Alkenylarylalkylen, Alkylaminoalkylen, Alkenylaminoalkylen, Alkylamidoalklylen oder Alkenylamidoalkylen repräsentiert, wobei jede der Alkyl-Gruppen etwa 14 bis etwa 24 Kohlenstoffatome enthält und verzweigt oder geradlinig verkettet und gesättigt oder ungesättigt sein kann und wobei die Alkylen-Gruppen etwa 1 bis etwa 6 Kohlenstoffatome besitzen; und R₂ und R₃ unabhängig voneinander aliphatische Ketten sind, die etwa 1 bis etwa 30 Kohlenstoffatome besitzen.

23. Verfahren nach Anspruch 21, bei dem das anionische Tensid ein Alkylsulfat oder ein Alkylsulfonat mit Alkalimetall-Gegenionen oder ein Alkylcarboxylat ist, wobei Alkyl eine Gruppe repräsentiert, die etwa 14 bis etwa 24 Kohlenstoffatome, vorzugsweise 16 bis etwa 22 Kohlenstoffatome, enthält, die verzweigt oder geradlinig verkettet und gesättigt oder ungesättigt sein können.

24. Verfahren nach Anspruch 21, bei dem das Gewichtsverhältnis des Aminoxid-Tensids zu dem anionischen Tensid im Bereich von etwa 100:1 bis etwa 50:50 liegt.

25. Verfahren nach Anspruch 21, bei dem der Zerklüftungsschritt bei Temperaturen von mehr als etwa 100°F stattfindet.

26. Verfahren nach einem der vorhergehenden Ansprüche, bei dem das viskoelastische Fluid durch Hinzufügung von Luft, Stickstoff oder Kohlendioxid aufgeschäumt oder mit Energie beaufschlagt wird.

## Revendications

1. Procédé de traitement d'une formation souterraine comprenant l'étape de pompage d'un fluide viscoélastique à travers un puits de forage, dans lequel ledit fluide viscoélastique comprend :
(a) un milieu aqueux ;
(b) un agent tensioactif choisi dans le groupe constitué par les agents tensioactifs amphotères, les agents tensioactifs zwittérioniques, et des mélanges de ceux-ci ; et
(c) un élément choisi dans le groupe constitué par les acides organiques, les sels d'acides organiques, les sels minéraux, et les combinaisons d'un ou plusieurs acides organiques ou sels d'acides organiques avec un ou plusieurs sels minéraux ;
dans lequel ledit fluide présente la propriété de viscoélasticité.

2. Procédé selon la revendication 1, dans lequel ledit procédé de traitement est un procédé de fracturation dans lequel ladite étape de pompage est effectuée à une pression suffisante pour fracturer ladite formation.

3. Procédé selon la revendication 2, dans lequel ledit fluide viscoélastique comprend en outre un acide minéral à une concentration suffisante pour réduire le pH dudit fluide viscoélastique à environ 3 ou moins.

4. Procédé selon l'une quelconque des revendications précédentes, dans lequel la quantité dudit agent tensioactif est d'environ 0,5 % à environ 6 % en poids dudit fluide.

5. Procédé selon l'une quelconque des revendications précédentes, dans lequel ledit agent tensioactif est un agent tensioactif zwittérionique comprenant un groupe hydrophile ammonium quaternaire lié de façon covalente à un groupe alkyle ou hydroxyalkyle.

6. Procédé selon l'une quelconque des revendications précédentes, dans lequel ledit agent tensioactif comprend un groupe hydrophile carboxylate.

7. Procédé selon l'une quelconque des revendications précédentes, dans lequel ledit élément comprend un groupe aromatique choisi dans le groupe constitué par les groupes sulfoniques, les groupes sulfonates, les groupes carboxyliques et les groupes carboxylates.

8. Procédé selon la revendication 7, dans lequel ledit groupe aromatique est choisi dans le groupe constitué par les ions salicylates et les ions phtalates, les ions hydroxynaphtalène carboxylates, et des mélanges de ceux-ci.

9. Procédé selon l'une quelconque des revendications précédentes, dans lequel ledit fluide viscoélastique comprend en outre un agent de soutènement particulaire en suspension dans celui-ci.

10. Procédé selon l'une quelconque des revendications précédentes, dans lequel ledit fluide viscoélastique comprend en outre un additif choisi dans le groupe constitué par les inhibiteurs de corrosion et les additifs réducteurs de filtrat et des mélanges de ceux-ci.

11. Procédé selon l'une quelconque des revendications précédentes, dans lequel ledit élément est présent en une quantité d'environ 0,1 % à environ 30 % en poids, de préférence en une quantité d'environ 0,1 % à environ 8 % en poids.

12. Procédé selon l'une quelconque des revendications précédentes, dans lequel ledit agent tensioactif est représenté par la formule (I) : 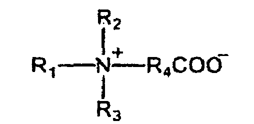
ou la formule (II) : 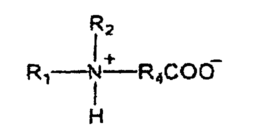
dans lesquelles R₁ représente un alkyle, un alcényle, un alkylarylalkylène, un alcénylarylalkylène, un alkylaminoalkylène, un alcénylaminoalkylène, un alkylamidoalkylène ou un alcénylamidoalkylène, dans lesquels chacun desdits groupes alkyles contient d'environ 14 à environ 24 atomes de carbone et peut être ramifié ou à chaîne linéaire, et saturé ou insaturé, et dans lesquels lesdits groupes alkylènes ont d'environ 1 à environ 6 atomes de carbone ; R₂ et R₃ sont indépendamment des chaînes aliphatiques ayant d'environ 1 à environ 30 atomes de carbone, et R₄ est un radical hydrocarbyle ayant une longueur de chaîne d'environ 1 à environ 4.

13. Procédé selon la revendication 12, dans lequel R₁ est choisi dans le groupe constitué par le tétradécyle, l'hexadécyle et l'octadécyle.

14. Procédé selon la revendication 12, dans lequel R₁ est un groupe alkyle dérivé d'huile de suif, de coco, de soja, de graines ou de colza.

15. Procédé selon la revendication 12, dans lequel R₂ et R₃ sont indépendamment un alkyle, un alcényle, un arylalkyle, un hydroxyalkyle, un carboxyalkyle ou un hydroxyalkyl-polyoxyalkylène, chacun ayant d'environ 1 à environ 10 atomes de carbone et sont de préférence un méthyle, un éthyle, un benzyle, un hydroxyéthyle, un hydroxypropyle, un carboxyméthyle ou un carboxyéthyle.

16. Procédé selon la revendication 12, dans lequel R₁ est RCONHCH₂CH₂CH₂- où R est un groupe alkyle contenant d'environ 14 à environ 24 atomes de carbone qui peut être ramifié ou à chaîne linéaire et qui peut être saturé ou insaturé et R₂ et R₃ sont chacun un bêta-hydroxyéthyle.

17. Procédé selon la revendication 16, dans lequel R₂ est un bêta-carboxyéthyle et R₄ est un éthylène.

18. Procédé selon l'une quelconque des revendications 1 à 11, dans lequel ledit agent tensioactif est choisi dans le groupe constitué par les glycinates de dihydroxyéthyle, les alcénylamidoalkyl bétaïnes et les dipropionates amphotères dérivés d'imidazoline, de toute préférence dans le groupe constitué par le suif glycinate de dihydroxyéthyle, le suifiminodipropionate de disodium et l'oléamidopropyl bétaïne.

19. Procédé selon la revendication 18, dans lequel ledit agent tensioactif est une alcénylamidoalkyl bétaïne.

20. Procédé selon la revendication 18 ou 19, dans lequel le fluide comprend d'environ 0,5 % à environ 6 % de l'agent tensioactif et d'environ 0,1 % à environ 6 % d'une combinaison d'un élément choisi dans le groupe constitué par un p-toluènesulfonate, un naphtalènesulfonate, l'acide chlorobenzoïque, l'acide salicylique et l'acide phtalique, avec un élément comprenant un ou plusieurs sels d'ammonium hydrosolubles.

21. Procédé selon l'une quelconque des revendications 1 à 11, dans lequel ledit agent tensioactif est un agent tensioactif de type oxyde d'amine et ledit élément est un agent tensioactif anionique contenant un hydrophobe ayant au moins 14 atomes de carbone.

22. Procédé selon la revendication 21, dans lequel ledit agent tensioactif de type oxyde d'amine a la formule 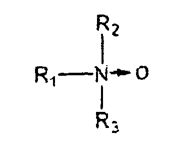
dans laquelle R₁ représente un alkyle, un alcényle, un alkylarylalkylène, un alcénylarylalkylène, un alkylaminoalkylène, un alcénylaminoalkylène, un alkylamidoalkylène ou un alcénylamidoalkylène, dans lesquels chacun desdits groupes alkyles contient d'environ 14 à environ 24 atomes de carbone et peut être ramifié ou à chaîne linéaire, et saturé ou insaturé, et dans lesquels lesdits groupes alkylènes ont d'environ 1 à environ 6 atomes de carbone ; R₂ et R₃ sont indépendamment des chaînes aliphatiques ayant d'environ 1 à environ 30 atomes de carbone.

23. Procédé selon la revendication 21, dans lequel ledit agent tensioactif anionique est un sulfate ou sulfonate d'alkyle ayant des contre-ions de métaux alcalins ou un carboxylate d'alkyle, où l'alkyle représente un groupe qui contient d'environ 14 à environ 24 atomes de carbone, de préférence de 16 à environ 22 atomes de carbone, qui peut être ramifié ou à chaîne linéaire et qui peut être saturé ou insaturé.

24. Procédé selon la revendication 21, dans lequel le rapport pondéral de l'agent tensioactif de type oxyde d'amine à l'agent tensioactif anionique va d'environ 100:1 à environ 50:50.

25. Procédé selon la revendication 21, dans lequel ladite étape de fracturation a lieu à des températures supérieures à environ 100°F.

26. Procédé selon l'une quelconque des revendications précédentes, dans lequel ledit fluide viscoélastique est expansé ou activé par l'addition d'air, d'azote ou de dioxyde de carbone.
